# EUROPEAN PATENT APPLICATION

(11) **EP 4 726 236 A1**
(43) Date of publication of application: **15.04.2026**
(21) Application number: 25207638.5
(22) Date of filing: 09.10.2025
(51) Int. Cl.: F16H 48/24

(54) **CONNECTION DEVICE FOR DIFFERENTIAL OR A GEARBOX AND DIFFERENTIAL AND GEARBOX COMPRISING THE DEVICE**

(30) Priority: 11.10.2024 IT 202400022680
(71) Applicant: FPT Industrial S.p.A., 10156 Torino (IT)
(72) Inventor: BRACHET COTA, Luca, 10156 Torino (IT); DI MONACO, Francesco, 10156 Torino (IT); PESOLA, Fabio, 10156 Torino (IT); ESPOSITO, Pietro, 10156 Torino (IT); GRIMALDI, Giacinto, 10156 Torino (IT); LORIA, Valentina, 10156 Torino (IT)
(74) Representative: Fiume, Orazio

(57) **Abstract**

A connecting device for a differential or a gearbox, for connecting a rotatable drive shaft to another member, the device (100) comprising a tubular-shaped cylinder (C) arranged to support a tubular-shaped piston (P), configured to accommodate and axially actuate a tubular-shaped collar (CL), configured to fit onto said drive shaft, and comprising anti-rotation means (33) with respect to said drive shaft, capable of permitting axial movement of the collar with respect to the drive shaft. The piston comprises radial protrusions (12) and the cylinder comprises lateral openings (13), complementary to the radial protrusions of the piston.

## Description

### Field of the invention

The present invention relates to the field of differentials and transmissions, and specifically to systems for connecting rotating parts of these devices.

For example, in a locking differential, one of the output shafts must be locked to the differential housing.

In a transmission, a gear wheel must be locked from rotation relative to a corresponding shaft.

These operations are selective, meaning they are reversible; therefore, the connecting device allows the reversible connection between said rotating parts.

### State of the art

Land vehicles are generally equipped with at least one drive axle equipped with a differential. In some circumstances, the differential is equipped with a lock. This allows the two axle shafts driven by the differential to rotate at the same speed.

US2803149 shows a device for locking a cylindrically symmetrical differential. It comprises a pneumatically actuated dog clutch in the form of a tubular collar, fixed in rotation relative to one of the axle shafts and sliding axially until it engages a complementary interface, associated with the differential's planetary cage, thus locking the differential.

In the solution shown in US2803149, a piston is coupled to a cylinder supported by a pair of arms, connected to the differential housing by screws.

The piston is constrained to slide axially relative to the cylinder and is retained in the cylinder by a spring that rests on a sealing ring. The piston, being axially integral with the collar, causes the collar to move axially. The collar is free to rotate relative to the piston, along with its axle shaft.

The piston and cylinder form a sealed annular compressed air chamber that is operationally connected to an external compressed air source to cause the collar to slide in the engaged configuration, while the spring is configured to oppose it, returning the collar to the disengaged configuration.

Alternatively, the spring can be replaced by a generic resilient element or by an additional annular compressed air chamber, arranged to push the piston in the opposite direction to the previous annular compressed air chamber. Obviously, at least one valve is present on the pneumatic circuit to control the piston via the pneumatic chamber. According to a preferred variant of the invention, the spring is external to the capsule, meaning it is interposed between the collar and a radial projection on the drive shaft. The function of the sealing ring is unchanged because it prevents the piston from slipping out of the cylinder.

The anti-rotation system shown in US2803149 is complex. It features a plate that is prevented from rotating by tabs protruding into the cylinder. The piston is locked to the plate by a pair of pins that lock the piston to the plate. Unless specifically excluded in the detailed description below, the information described in this chapter is to be considered an integral part of the detailed description.

### Summary of the invention

The purpose of the present invention is to propose a device for actuating a connection between two transmission components that is simpler than the prior art, or at least alternative to the prior art.

The basic idea of the present invention is to constrain the piston rotation directly to the relative cylinder by means of at least one, and preferably two or more, radial protrusions arranged to engage respective seats in the cylinder.

When the protrusions engage their respective seats, an operational coupling is created that allows the piston to slide axially relative to the cylinder but prevents rotation of the piston relative to the cylinder along a common axis.

The piston and cylinder assembly are assembled together by means of a sealing ring, supporting a return spring, positioned close to the cylinder seats.

Similarly to the prior art, the piston is actuated pneumatically by means of a chamber defined between the piston and the cylinder and at least one lateral opening in the cylinder.

The collar is secured to the piston by a ring nut designed to be attached to the piston at the end opposite the toothed end of the collar.

Advantageously, the cylinder and piston assembly, complete with return spring, sealing ring, collar, and locking ring, define a capsule designed to be installed inside the housing of a transmission component such as a differential, a gearbox, or a generic axial connection device.

The present invention is better described with the aid of claim 1.

This refers only to the connection device, as it is independent of the specific application, which, as expected, may relate to a transmission and more specifically to a gearbox or differential.

The dependent claims describe preferred variants of the invention and form an integral part of this specification.

### Brief description of the figures

Further purposes and advantages of the present invention will be made clear from the following detailed description of an embodiment thereof (and variations thereof) and the accompanying drawings, which are provided purely for explanatory and non-limiting purposes, in which:
Figure 1 shows an example of a locking device that is the subject of the present invention;
Figure 2 shows an exploded view of the same device as Figure 1.

The same reference numbers and letters in the figures identify the same elements, components, or functions.

It should also be noted that the terms "first," "second," "third," "upper," "lower," and the like may be used herein to distinguish various elements. These terms do not imply a spatial, sequential, or hierarchical order for the modified elements unless specifically indicated or inferred from the text.

The elements and features illustrated in the various preferred embodiments, including the drawings, may be combined without departing from the scope of this application as described below.

### Detailed description of preferred embodiments

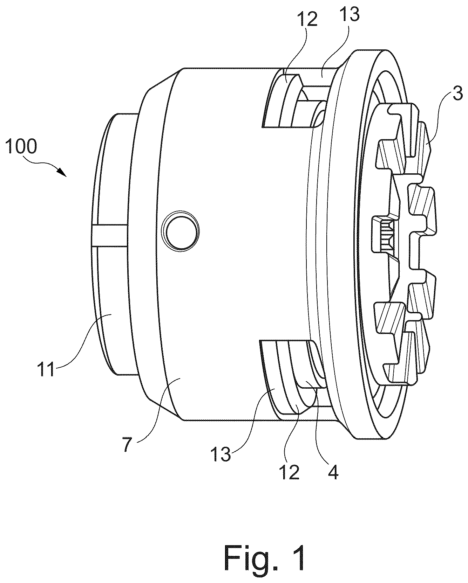

Figure 1 shows an example of the locking device of the present invention in an assembled configuration, forming a sort of capsule for actuating a transmission lock or engagement.

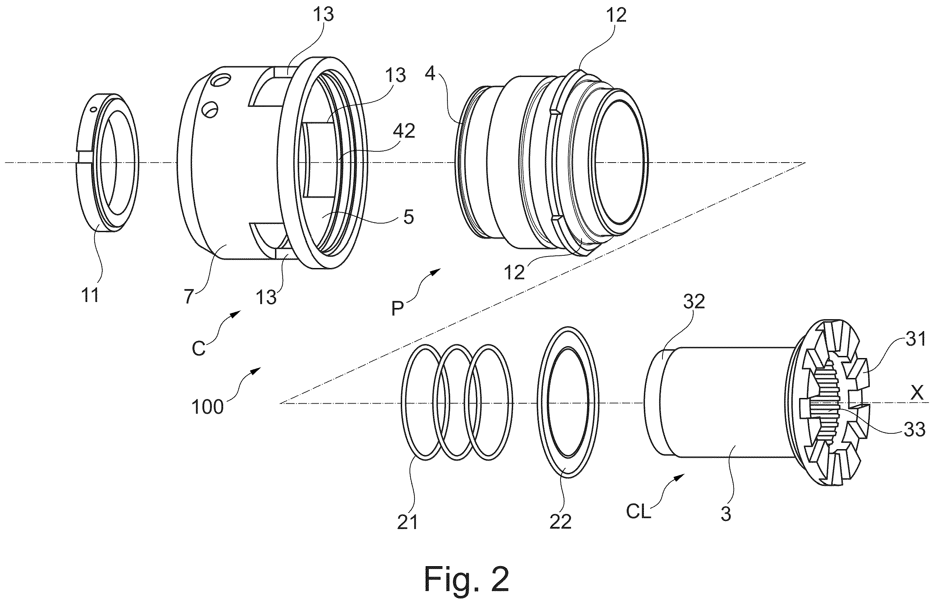

Figure 2 shows an exploded view of the same device of Figure 1.

The cylinder C has a substantially tubular shape with respect to a development axis X and therefore defines an internal cavity. It defines an internal surface 5 with cylindrical symmetry, and preferably, but not necessarily, the external surface 7 is also cylindrical.

The internal surface is designed to slidably support the piston P, creating a cylinder-piston configuration.

The cylinder-piston coupling is airtight to create a linear pneumatic actuator.

The piston has a stepped external surface to define a pneumatic chamber, similar to the prior art, and has a substantially cylindrical internal surface to accommodate the collar CL and to allow it to rotate freely with respect to the development axis X.

The X-axis is referred to as the "development axis" rather than the rotation axis due to the presence of radial protrusions 12.

Bearings may be provided to facilitate the free rotation of the collar relative to the piston.

According to the present description, "under operating conditions", as known by those skilled in the art, means that the connecting device is mounted and associated with a transmission, a differential, or a gearbox.

It is worth noting that a gearbox is a more specific device than a transmission. While a transmission may consist of a pair of coaxial shafts that can be selectively interconnected, a gearbox requires the presence of multiple gears to provide multiple gears.

As in the prior art, the collar also has a tubular shape, comprising a tubular shaft 3 to be fitted onto a rotatable drive shaft, such as a half-shaft or a propeller shaft. The inner surface of the collar is equipped with anti-rotation means 33, for example, a grooved profile, complementary to a profile made on the drive shaft onto which it is intended to be fitted.

One end of the collar is equipped with axial teeth 31, preferably associated with an annular plate integral with the shaft 3. This axial toothing cooperates to define a frontal engagement.

The piston, according to the invention, is equipped with at least one and preferably two or more radial protrusions 12, preferably fairly spaced from each other, and arranged along an annular circumference of the piston.

The cylinder, according to the invention, includes annular openings 13, complementary to the one or more radial protrusions of the piston, and configured as slots to allow the same protrusions 12, when the piston is associated with the cylinder, a clearance corresponding to the axial movement of the piston relative to the cylinder. However, the slotted/protrusion coupling prevents the piston and cylinder from rotating relative to each other.

The axial movement allowed by the slotted/protrusion coupling is sized to be sufficient to allow the complete engagement and disengagement of the collar teeth 31 from an opposing toothing on another transmission component. The openings can be through-holes, as shown in the figures, or they can be blind, defining seats to accommodate the piston protrusions 12, preventing its rotation relative to the cylinder.

A return spring 21 is fitted onto the piston P and positioned axially between the piston itself and a sealing ring 22, which is intended to be housed in a respective seat 42 formed in the internal surface of the cylinder in an axial end position.

The collar CL is configured to be inserted into the piston along the development axis X and locked onto it by means of a ring nut 11 arranged to thread on the end 32 of the shaft 3 opposite the end equipped with axial teeth 31.

Evidently, the axial extension of the shaft must be sufficient to protrude from the cylinder-piston assembly in order to connect the ring nut 11.

The connection of the ring nut prevents both the piston and the collar from slipping out of the cylinder.

As per the prior art, the cylinder is equipped with at least one opening corresponding to the pneumatic chamber. The pneumatic actuation of the piston P is counteracted by the return spring, which brings the collar CL into the disengaged configuration following the cessation of pressurization of the pneumatic chamber.

The device 100, the subject of the present invention, can be used inside a differential to lock it by rotating a half-shaft with its planet carrier.

The device can also be used in a gearbox and, in general, in any situation where it is necessary to connect a rotatable driveshaft to another device.

From the above description, the person skilled in the art is able to implement the object of the invention without introducing further construction details.

## Claims

1. A connection device for a differential or a gearbox, wherein the differential or gearbox comprises a rotatable drive shaft and a further component to which the rotatable drive shaft is selectively connectable, the device (100) comprising
- a tubular cylinder (C) defining a development axis (X)
- a tubular piston (P),
- a tubular collar (CL), configured to fit onto said rotatable drive shaft and comprising anti-rotation means (33) with respect to said rotatable drive shaft, wherein the anti-rotation means (33) are adapted to allow only axial movement of the collar with respect to the rotatable drive shaft,
wherein, under operating conditions, the piston is inserted into an internal cavity of the cylinder, so as to be able to slide with respect to the cylinder along said development axis (X) and wherein the collar is inserted into the piston and connected to the piston so as to be able to rotate freely with respect to the piston,
the device (100) being **characterised in that** the cylinder comprises a lateral seat (13) and the piston comprises at least one radial protrusion (12) inserted into the lateral seat (13) and wherein a clearance between said lateral seat and said radial protrusion is such as to allow an axial movement of the piston with respect to the cylinder along said development axis (X) identifying a first end configuration, of extension, and a second end configuration, of retraction.

2. Device according to claim 1, wherein the piston comprises a plurality of radial protrusions and the cylinder corresponding lateral seats, and in which the radial protrusions and the lateral seats are spaced equally from each other along an annular circumference of the piston and the cylinder respectively.

3. Device according to any of the preceding claims, in which the collar comprises a cylindrical shaft (3) comprising a first end equipped with a toothing (31).

4. A device according to any preceding claim, further comprising a return spring (21) fitted onto the piston and interposed between the piston and the cylinder so as to force the piston into said retraction configuration.

5. A device according to any preceding claim 1 - 3, comprising a second pneumatic chamber for forcing the piston into said retraction configuration.

6. A device according to any preceding claim 1 - 5, wherein a first pneumatic chamber is defined between the cylinder and the piston for forcing the piston into said extension configuration.

7. A differential comprising a differential housing and two half-shafts defining as many rotatable drive shafts and a differential connection device arranged to make one of the two rotatable drive shafts integral with each other with the differential housing and wherein the connection device is according to any preceding claim 1 - 6.

8. A gearbox comprising a rotatable drive shaft and a gearwheel defining a further component and a connecting device (100) of the gearwheel to the rotatable drive shaft, wherein the connecting device is according to any one of claims 1 - 7.

9. A mechanical transmission comprising a rotatable drive shaft and a further rotatable drive shaft, coaxial with said rotatable drive shaft and comprising a connection device according to any one of claims 1 - 7, so as to make said rotatable drive shaft rotatably integral with said further rotatable drive shaft.

10. A differential or gearbox or mechanical transmission comprising
- said rotatable drive shaft,
- said connection device, according to any one of claims 1-4, 7, and
- a resilient element, such as a cylindrical spring, interposed between said collar and a radial projection of the rotatable drive shaft.

11. A land vehicle comprising a gearbox and/or a transmission and/or a differential according to claims 8, 9, 10, respectively.

12. A land vehicle according to claim 11, comprising a source of compressed air operably connectable to said first pneumatic chamber to cause a movement of the piston in said extended condition.

13. A land vehicle according to claim 12, wherein the source of compressed air is operably connectable to said second pneumatic chamber to cause movement of the piston in said retracted condition.

14. A vehicle according to claim 13 or 14, further comprising a controllable valve for connecting the source of compressed air to said first or second pneumatic chamber, respectively.
